# EUROPEAN PATENT SPECIFICATION

(11) **EP 3 338 201 B1**
(45) Date of publication and mention of the grant of the patent: **08.01.2020**
(21) Application number: 16804975.7
(22) Date of filing: 15.11.2016
(51) Int. Cl.: G06F 16/9038

(54) **DIALER APPLICATION**
WÄHLANWENDUNG
APPLICATION DE COMPOSEUR

(30) Priority: 20.11.2015 US 201514947529
(43) Date of publication of application: 27.06.2018
(73) Proprietor: Google LLC, Mountain View, CA 94043 (US)
(72) Inventor: LAI, Charles, Mountain View, California 94043 (US); MIRANDA, Nicolas Alexander, Mountain View, California 94043 (US)
(74) Representative: Suckling, Andrew Michael
(86) International application number: PCT/US2016/062053
(87) International publication number: WO 2017/087396

(56) References cited:
- US-A1- 2003 146 939
- US-A1- 2013 218 902
- US-A1- 2013 321 314
- US-A1- 2015 186 366

## Description

### BACKGROUND

Users of mobile devices typically do not store phone numbers of businesses in their personal contacts, especially if the business is one that the user infrequently calls. For example, a user may not store a particular restaurant's contact information in his or her contacts. Thus, when the user desires to call the business, the user searches for the business listing using a search application to find the phone number of the business.

Some phone applications on user devices allow for searching of entities that are not stored in a user's contact file, such as businesses, within the dialer application itself. However, when search results are returned to the user's device, they may often be duplicative or otherwise fail to satisfy the user's informational need. An example of the former, duplicative search results, occurs when a user is searching for the phone number of an entity that has multiple locations, such as in the case of a franchised restaurant. Often the user may need to exit the dialer application and resume searching in a browser application so that the user may find additional information about each particular location, such as times the particular location is open, a map of the location, and so on. This increases time taken to retrieve the desired information, and/or increases the processing resources that are required to retrieve the desired information.

Likewise, a search result that is not duplicative may also fail to satisfy a user's information need. For example, the dialer application may display a result responsive to the user's query that lists an entity name and address. However, the user may desire other information before placing a call, such as a map of the location at which the entity is located, or user ratings of the entity, etc. Once again, the user must exit the dialer application and resume searching in the browser application to find the additional information the user desires. Again, this increases the time taken, and/or the processing resources required, to retrieve the desired information. US 2013/0218902A1 teaches a directory system which aggregates and synchronizes contact information across users.

### SUMMARY

This specification describes technologies relating to search results in a dialer application user interface. The scope of the invention is defined in the appended claims. Any reference to "embodiment(s)", "example(s)" or "aspect(s) of the invention" in this description not falling under the scope of the claims should be interpreted as illustrative example(s) for understanding the invention.

In general, one innovative aspect of the subject matter described in this specification can be embodied in methods that include the actions of displaying, on a display of the user device, a user interface environment for a telephone dialing application, the user interface environment including a query input field and a search result display field; displaying, in response to a query provided as input in the query input field, search results responsive to the query, each search result identifying a respective entity determined to be responsive to the query, wherein: a first search result of the search results is initially displayed in a knowledge panel format that provides data describing a first set of fact types for the respective entity determined identified by the first search result, and each remaining search result of the search result is initially displayed in a summary format that provides data describing a second set of fact types for the respective entity identified by the remaining search result, and wherein the second set of fact types is a proper subset of the first set of fact types; receiving an expansion selection of one of the remaining search results, and in response: transforming the display of the first search result from the knowledge panel format to the summary format, transforming the display of the one of the remaining search results from the summary panel format to the knowledge panel format, and receiving a dial selection of one of the search results and in response placing a voice call from the data processing device to the respective entity identified by the one of the search results. Other embodiments of this aspect include corresponding systems, apparatus, and computer programs, configured to perform the actions of the methods, encoded on computer storage devices. Other embodiments provide a computer readable medium storing instructions executable by a user device that, upon such execution, cause the user device to perform operations comprising a method of the invention.

Particular embodiments of the subject matter described in this specification can be implemented so as to realize one or more of the following advantages. The providing of additional information in a dialer application increases the likelihood that a user's informational need may be satisfied without the need to switch to a different application, such as a browser application. This provides a saving in required computing resources and/or a reduction in network traffic, since the user is able to place a call directly from the dialer application without needing to call up on or more other applications. This also provides a reduction in subsequent search requests for, e.g., a phone number, to a search engine, which, in turn, reduces network traffic and frees up search engine resources

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1 is a block diagram of an example environment in which a mobile device may support multi-format search results in a dialer application.
Figs. 2A and 2B are illustrations of a user device displaying multi-format search results in a dialer application user interface.
Fig. 3 is a flow diagram of an example process for processing multi-format search results.

Like reference numbers and designations in the various drawings indicate like elements.

### DETAILED DESCRIPTION

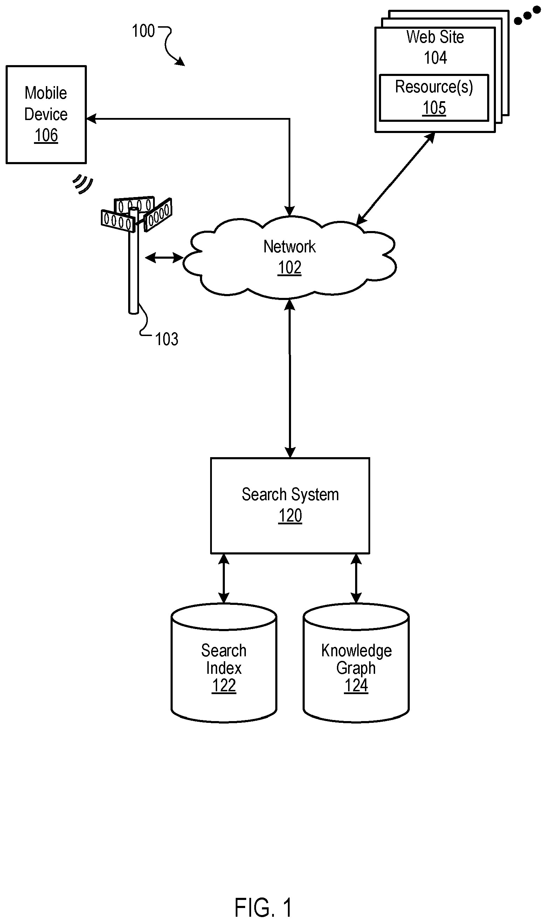

Fig. 1 is a block diagram of an environment 100 in which a user device 106, such as a mobile device, may support multi-format search results in a dialer application. A computer network 102, such as the Internet, or a combination thereof, provides for data communication between electronic devices and systems. The computer network 102 may also include, or be in data communication with, one or more wireless networks 103 by means of one or more gateways.

The user device 106 is an electronic device that is under the control of a user and is capable of requesting and receiving resources over the network 102, establishing communication channels, e.g., voice communications, with other user devices, and also capable of performing other actions. Example user devices 106 include personal computers, mobile communication devices, and other devices that can send and receive data over the network 102. In the example of Fig. 1, the user device 106 is a smart phone. The user device 106 may communicate over the networks 102 and 103 by means of wired and wireless connections with the networks 102 and 103.

A web site 104 is one or more resources 105 associated with a domain name and hosted by one or more servers. An example web site is a collection of web pages formatted in hypertext markup language (HTML) that can contain text, images, multimedia content, and programming elements, e.g., scripts. Each web site 104 is maintained by a publisher, e.g., an entity that manages and/or owns the web site.

A resource 105 is data provided over the network 102 and that is associated with a resource address, e.g., a uniform resource locator. Resources 105 that can be provided by a web site 104 include HTML pages, word processing documents, and portable document format (PDF) documents, images, video, and feed sources, to name just a few. The resources 105 can include content, e.g., words, phrases, images and sounds and may include embedded information, e.g., meta information and hyperlinks, and/or embedded instructions, e.g., scripts.

To facilitate searching of resources 105, the search system 120 identifies the resources 105 by crawling and indexing the resources 105 provided on web sites 104. Data about the resources 105 can be indexed based on the resource to which the data corresponds. The indexed and, optionally, cached copies of the resources 105 are stored in a search index 122.

The search system 120 may derive from the search index 122 a knowledge graph 124. The knowledge graph 124 is a representation of relationships between entities and facts in the forms of nodes and edges. Each node in the knowledge graph represents a different entity, and pairs of nodes in the knowledge graph are connected by one or more edges. Each edge representing a relationship dimension that defines a relationship between the two entities represented by the pair of nodes, or several edges represent a series of relationships that connect two entities by one or more intermediate entities.

The search system 120 can access the knowledge graph 124 and generate knowledge panels. A knowledge panel is a user interface element that provides information or other content related to a particular entity, such as a person, business entity, place, country, landmark, animal, historical event, organization, sports team, sporting event, movie, song, album, game, work of art, or any other entity. Typically a knowledge panel provides a summary of information for the entity. For example, a knowledge panel for a business may include the address of the business, a phone number, images of the business, and customer reviews of the business, and so on. Other types of information and content can also be presented in the knowledge panel.

The content of a knowledge panel may include content published or otherwise provided by multiple resources, such as multiple web pages. For example, a knowledge panel for a landmark may include an image of the landmark that has been published on a first web page that is hosted by a first publisher. The knowledge panel may also include a set of facts about the landmark that have been published on a second web page published by a second publisher different from the first publisher.

A user may provide search queries to the search system 120 and receive search results in response to the query. The content of the search result may depend on what application is used by the user device 106 for submitting queries to search the search index 122. For example, when a browser is used to submit the query, the search result identifies a resource 105 that is responsive to a particular search query, and includes a link to the resource 105. An example search result in this situation includes a web page title, a snippet of text or a portion of an image extracted from the web page, and the URL of the web page.

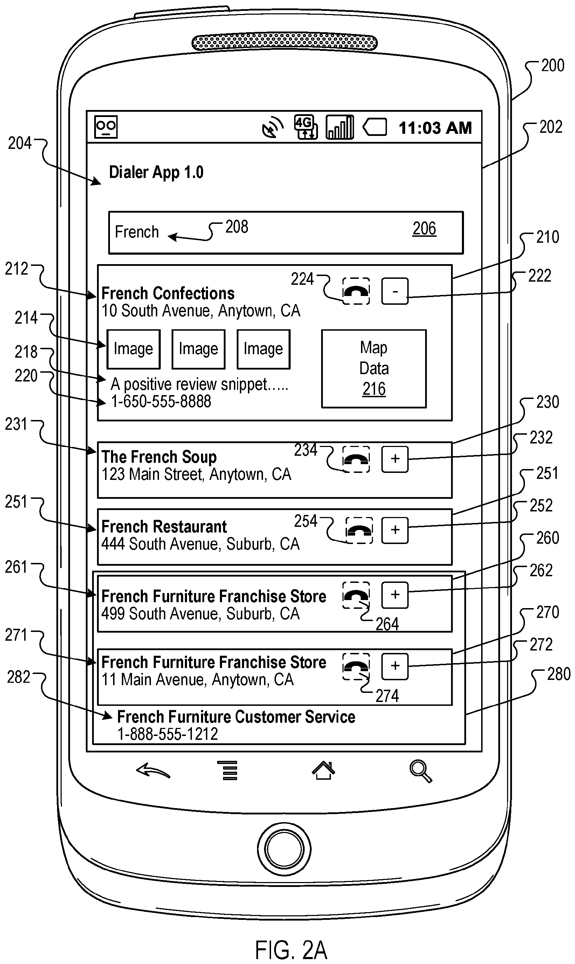

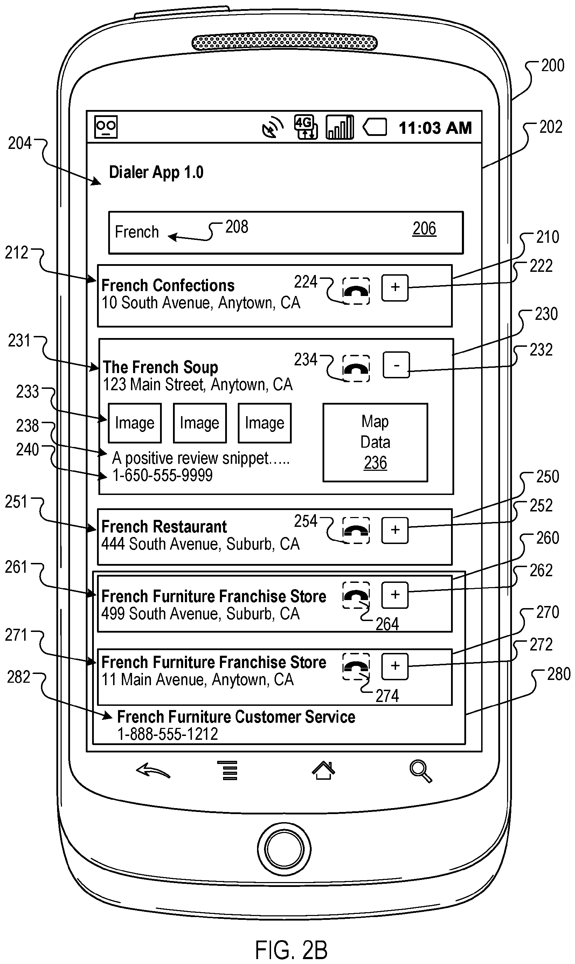

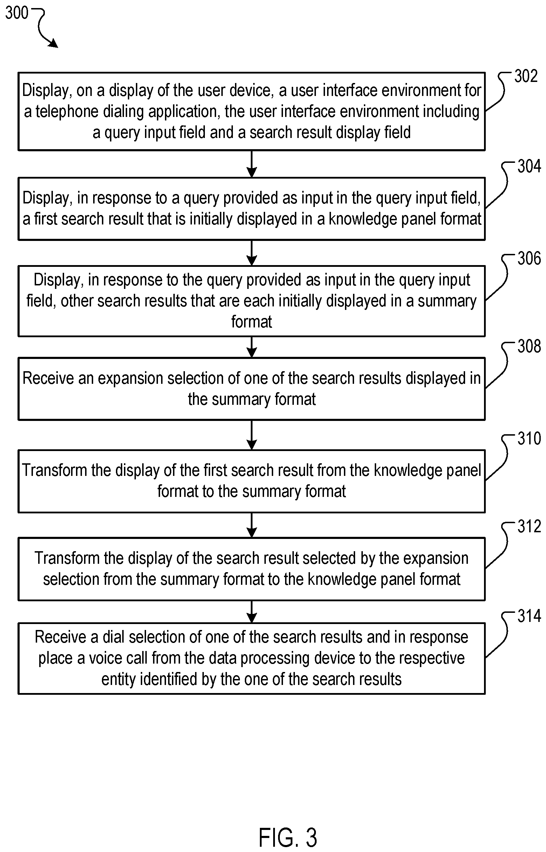

However, when a phone dialer application is used, the search result instead includes a name of an entity, a location, and data that causes the mobile device 106 to place a call to the entity when the search result is selected at the user device. Furthermore, as will be described below with reference to Figs. 2A, 2B and 3, when the search system 120 receives a query from the dialer application (as indicated by metadata provided with the search query), the search system 120 may provide the search results in different formats. A first format is a knowledge panel format, and a second format is a summary format.

Figs. 2A and 2B are illustrations of a user device 200 displaying multi-format search results 210, 230, 250, 260 and 270 in a dialer application user interface 202. The processing of the search results 210, 230, 250, 260 and 270 in Figs. 2A and 2B is also described with reference to Fig. 3, which is a flow diagram of an example process 300 for processing multi-format search results. The process 300 is implemented in a user device, such as the user device 200, by use of instructions that cause the user device to display the described features on a user interface and to perform the described functions in response to user interactions with the user interface.

The process 300 displays, on a display of the user device, a user interface environment for a telephone dialing application, the user interface environment including a query input field and a search result display field (302). As illustrated in Fig. 2A, a user interface 202 of a dialer application is displayed. As used herein, a dialer application differs from a browser application in that the dialer application is configured to place a phone call to an entity referenced by a search result in response to a selection of a search result. Typically such functionality is supported by a browser application only when a user selects contact data - such as a phone number - that can be resolved to place a phone call.

The user interface includes an input field 206. Within the input field 206 the query [French] 208 has been entered by a user as input. The process 300 displays, in response to the query provided as input in the query input field, a first search result that is initially displayed in a knowledge panel format (304), and other search results that are each initially displayed in a summary format (306). As illustrated in Fig. 2A, the search result 210 is displayed in the knowledge panel format, and the other search results 230, 250, 260 and 270 are displayed in a summary format.

Each search result shown in Fig. 2A identifies a respective entity determined to be responsive to the query 208. The search result 210 is initially displayed in the knowledge panel format that provides data describing a first set of fact types for the respective entity determined identified by the first search result 210. Each of the remaining search results 230, 250, 260 and 270 is initially displayed in a summary form that provides data describing a second set of fact types for the respective entity identified by the remaining search result. The second set of fact types is a proper subset of the first set of fact types. As shown in Fig. 2A the first search result 210, when displayed in a knowledge panel format, includes the name and address 212 of the entity, images related to the entity (e.g., pictures of products, employees, etc.), map data 216 that, which selected, may display a map of the location of the entity, and other information, such as a review 218 and the phone number 220. The remaining search results 230, 250, 260 and 270, however, are displayed in summary form, and include the name and address data 231, 251, 261 and 271.

Each search result includes a first icon 222, 232, 252, 262 and 272 that toggles the display format and the search result between the summary format and the knowledge panel format. As shown in Fig. 2A, the first icon 222 of the first search result 210 includes a "-" symbol, which indicates the search result 210 will be collapsed upon selection of the first icon. The first icons 232, 252, 262 and 272 of the other search results, however, include a "+" symbol, which indicates a respective search result will be expanded upon selection of the first icon.

In some implementations, a selection of any location of a search result in summary form, other than the first icon, results in a dial selection of the search result, which causes the user device 200 to place a voice call to the respective entity identified by the search result. However, in some implementations, a separate second icon, such as icons 224, 234, 254, 264 and 274 may be included as a dial selection icon, and only a selection of the second icon causes the user device to place the voice call. In a variation of this implementation, a selection of a search result displayed in summary form in any location other than the first and second icon causes the user device to launch a browser application that displays a web page of the resource.

In some implementations, the search result displayed in the knowledge panel format may be subject to the same user interaction model as a search result displayed in a summary format, i.e., a selection of any location of the search result, other than the first icon, results in a dial selection of the search result; or only a selection of the second icon causes the user device to place the voice call if a second icon is displayed.

In still other implementations, each displayed element 212, 214, 216, 218 and 220 may invoke a particular function when selected when the search result is displayed in the knowledge panel format. For example, selecting 212 may cause a browser to launch and display a web page; selection 214 may cause another application to launch and display an image library for the entity; and so on.

In some implementations, only one search result may be displayed in the knowledge panel format at any one time. Thus, when one search result is expanded, any other search result displayed in the knowledge panel format is transformed into a summary format. This is shown with reference to Fig. 2B. To generate the display of Fig. 2B, the process 300 receives an expansion selection of one of the search results displayed in the summary format (308). For example, assume the user selects the icon 232 of the search result 230.

The process 300 transforms the display of the first search result from the knowledge panel format to the summary format (310), and 300 transforms the display of the search result selected by the expansion selection from the summary format to the knowledge panel format (312). For example, as shown in Fig. 2B, the search result 210 is now displayed in the summary format, and the search result 230 is displayed in the knowledge panel format with data elements 234, 236, 238 and 240. While the corresponding fact types are the same for the search result 210 and 230 when displayed in the knowledge panel format, the fact types may differ. For example, instead of images 233, the search result could include a menu item and a price.

The process 300 receives a dial selection of one of the search results and in response places a voice call from the data processing device to the respective entity identified by the one of the search results (314). For example, a user may select the search result 250, e.g., by pressing the address data 252, which causes the user device 200 to place a voice call to the entity "French Restaurant." As noted, this ability to place the voice call directly from the dialer application without needing to call up on or more other applications provides a saving in required computing resources and/or a reduction in network traffic. In addition, the ability to place the voice call directly from the dialer application saves the user time. Also while many browser applications support the ability to place a phone call to an entity listed in a search result or from an entity's home page, a user must nevertheless press or touch a particular phone listing in the result to initiate a call. Many users, however, find it difficult to locate a phone number on a page displayed in a limited display space on mobile device. Thus, users often spend time searching for the phone number on the page, wasting time and effort. Providing additional information in a dialer application, for example in a knowledge panel type format, addresses (and potentially overcomes) these difficulties Furthermore, the ability to satisfy a user's informational need within the dialer application tends to increase user engagement, as the user is less likely to abandon an attempt to place a call to an entity when the user's focus may stay within the application environment as compared when a user's focus must switch between application environments.

In some implementations, the user device 200 groups search results that each describe a respectively different sets of contact information for a particular entity. For example, as shown in Figs. 2A and 2B, the search results 260 and 270 both relate to franchise locations of a particular store. In these situation, a border 280, or any other grouping indicator, can be used to identify the grouped search results. Additionally, the user device may display, as associated with the grouping of search results, contact information common to each of the particular entities. For example, as shown in Fig. 2A, a toll-free customer service number 282 is displayed. Thus, the user may call either store location by selecting respective search results 260 or 270, or may call the toll free number by selecting the toll free number 282.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory computer storage medium for execution by, or to control the operation of, data processing apparatus. The computer storage medium can be a machine-readable storage device, a machine-readable storage substrate, a random or serial access memory device, or a combination of one or more of them. The computer program may include multiple files, and may be deployed to execute one or more data processing apparatus.

The term "data processing apparatus" encompasses all kinds of apparatus, devices, and machines for processing data, including by way of example a programmable processor, a computer, special-purpose circuitry, or multiple processors or computers. The apparatus can also include, in addition to hardware, code that creates an execution environment for the computer program in question, e.g., code that constitutes processor firmware, a protocol stack, a database management system, an operating system, or a combination of one or more of them.

The processes and logic flows described in this specification can be performed by one or more programmable computers executing one or more computer programs to perform functions by operating on input data and generating output, or one or more special purpose logic circuity.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A method performed by a user device, the method comprising:
displaying, (302) on a display of the user device, a user interface environment for a telephone dialing application, the user interface environment including a query input field and a search result display field;
in response to a query provided as input in the query input field, sending, by the telephone dialing application, the query to a search system;
receiving and displaying, by the dialing application, search results responsive to the query, each search result identifying a respective entity determined to be responsive to the query, wherein:
a first search result of the search results is initially displayed in a knowledge panel format (304) that provides data describing a first set of fact types for the respective entity determined identified by the first search result; and
each remaining search result of the search result is initially displayed in a summary format (306) that provides data describing a second set of fact types for the respective entity identified by the remaining search result, and wherein the second set of fact types is a proper subset of the first set of fact types and comprises name and location data for the respective entity;
receiving, (308) by the dialing application, an expansion selection of one of the remaining search results, and in response:
transforming (310) the display of the first search result from the knowledge panel format to the summary format; and
transforming (312) the display of the one of the remaining search results from the summary panel format to the knowledge panel format; and
receiving (314) a dial selection of one of the search results and in response placing, by the dialing application, a voice call from the data processing device to the respective entity identified by the one of the search results.

2. The method of claim 1, wherein displaying search results responsive to the query comprises:
grouping search results that each describe a respectively different set of contact information for a particular entity; and
displaying, as associated with the grouping of search results, contact information common to each of the particular entities.

3. The method of claim 2, wherein the contact information common to each of the particular entities is a toll free telephone number.

4. The method of claim 1, 2 or 3, wherein the first set of fact types includes a first image, and each of the second set of fact types do not include the first image.

5. The method of any preceding claim wherein the first set of fact types includes a phone number, and each of the second set of fact types do not include the phone number.

6. The method of any preceding claim, wherein each search result displayed in summary form includes a first icon that, when selected by the user, generates the expansion selection of the search result, and/or wherein each search result includes a dial selection icon that, when selected by the user, generates the dial selection of the search result.

7. The method of any one of claims 1 to 6, wherein each search result displayed in summary format, when selected in a display portion that is not inclusive of the first icon included in the search result, by the user, generates the dial selection of the search result.

8. A user device, (200) comprising:
a processing device;
a display coupled to the processing device;
a communication system coupled to the processing device; and
a memory system coupled to the processing device and storing instructions executable by the processing device that, upon such execution, cause the user device to perform operations comprising:
displaying, on the display of the user device, a user interface environment for a telephone dialing application, the user interface environment including a query input field and a search result display field;
in response to a query provided as input in the query input field sending, by the telephone dialing application, the query to a search system;
receiving and displaying, by the dialing application, in response to a query provided as input in the query input field, search results responsive to the query, each search result identifying a respective entity determined to be responsive to the query, wherein:
a first search result of the search results is initially displayed in a knowledge panel format that provides data describing a first set of fact types for the respective entity determined identified by the first search result; and
each remaining search result of the search result is initially displayed in a summary format that provides data describing a second set of fact types for the respective entity identified by the remaining search result, and wherein the second set of fact types is a proper subset of the first set of fact types and comprises name and location data for the respective entity;
receiving, by the dialing application, an expansion selection of one of the remaining search results, and in response:
transforming the display of the first search result from the knowledge panel format to the summary format; and
transforming the display of the one of the remaining search results from the summary panel format to the knowledge panel format; and
receiving a dial selection of one of the search results and in response placing, by the dialing application, a voice call from the data processing device to the respective entity identified by the one of the search results.

9. The user device of claim 8, wherein displaying search results responsive to the query comprises:
grouping search results that each describe a respectively different set of contact information for a particular entity; and
displaying, as associated with the grouping of search results, contact information common to each of the particular entities.

10. The user device of claim 9, wherein the contact information common to each of the particular entities is a toll free telephone number.

11. The user device of claim 8, 9 or 10, wherein the first set of fact types includes a first image, and each of the second set of fact types do not include the first image, and/or wherein the first set of fact types includes a phone number, and each of the second set of fact types do not include the phone number.

12. The user device of claim 8, 9, 10 or 11, wherein each search result displayed in summary form includes a first icon that, when selected by the user, generates the expansion selection of the search result.

13. The user device of claim 8, 9, 10, 11 or 12, wherein each search result includes a dial selection icon that, when selected by the user, generates the dial selection of the search result.

14. The user device of claim 12, wherein each search result displayed in summary format, when selected in a display portion that is not inclusive of the first icon included in the search result, by the user, generates the dial selection of the search result.

15. A non-transitory computer readable medium storing instructions executable by a user device that, upon such execution, cause the user device to perform operations comprising a method as defined in any one of claims 1 to 7.

## Patentansprüche

1. Verfahren, das durch eine Benutzervorrichtung ausgeführt wird, wobei das Verfahren umfasst:
Anzeigen (302) einer Benutzerschnittstellenumgebung für eine Telefonwählanwendung auf einer Anzeige der Benutzervorrichtung, wobei die Benutzerschnittstellenumgebung ein Anfrageeingabefeld und ein Suchergebnisanzeigefeld einschließt;
als Antwort auf eine Anfrage, die als Eingabe in das Anfrageeingabefeld bereitgestellt wird, erfolgendes Senden der Anfrage durch die Telefonwählanwendung an ein Suchsystem;
Empfangen und Anzeigen von Suchergebnissen, die auf die Anfrage reagieren, durch die Wählanwendung, wobei jedes Suchergebnis eine jeweilige Entität identifiziert, von der bestimmt wurde, dass sie auf die Anfrage reagiert, worin:
ein erstes Suchergebnis der Suchergebnisse zunächst in einem Knowledge-Panel-Format (304) angezeigt wird, das Daten bereitstellt, die eine erste Menge von Faktentypen für die jeweilige durch das erste Suchergebnis bezeichnete und identifizierte Entität beschreiben; und
jedes verbleibende Suchergebnis der Suchergebnisse zunächst in einem Übersichtsformat (306) angezeigt wird, das Daten bereitstellt, die eine zweite Menge von Faktentypen für die durch das verbleibende Suchergebnis identifizierte jeweilige Entität beschreiben, und worin die zweite Menge von Faktentypen eine geeignete Teilmenge der ersten Menge von Faktentypen ist und Namen- und Standortdaten für die jeweilige Entität umfasst;
Empfangen (308) einer Erweiterungsauswahl eines der verbleibenden Suchergebnisse durch die Wählanwendung und als Antwort:
Transformieren (310) der Anzeige des ersten Suchergebnisses vom Knowledge-Panel-Format in das Zusammenfassungsformat; und
Transformieren (312) der Anzeige des einen der verbleibenden Suchergebnisse vom Zusammenfassungspanelformat in das Knowledge-Panel-Format; und
Empfangen (314) einer Wählauswahl eines der Suchergebnisse und als Antwort darauf durch die Wählanwendung erfolgendes Einleiten eines Sprachanrufs von der Datenverarbeitungsvorrichtung zu der jeweiligen durch das eine der Suchergebnisse identifizierten Entität.

2. Verfahren nach Anspruch 1, worin das Anzeigen von Suchergebnissen, die auf die Anfrage reagieren, umfasst:
Gruppieren von Suchergebnissen, deren jedes eine jeweils andere Menge von Kontaktinformation für eine jeweilige Entität beschreibt; und
Anzeigen von Kontaktinformation, die jeder der jeweiligen Entitäten gemeinsam ist, als mit der Gruppierung von Suchergebnissen zusammengehörig.

3. Verfahren nach Anspruch 2, worin die Kontaktinformation, die jeder der einzelnen Entitäten gemeinsam ist, eine gebührenfreie Telefonnummer ist.

4. Verfahren nach Anspruch 1, 2 oder 3, worin die erste Menge von Faktentypen ein erstes Bild einschließt und jeder aus der zweiten Menge von Faktentypen das erste Bild nicht einschließt.

5. Verfahren nach einem vorhergehenden Anspruch, worin die erste Menge von Faktentypen eine Telefonnummer einschließt und jeder aus der zweiten Menge von Faktentypen die Telefonnummer nicht einschließt.

6. Verfahren eines vorangegangenen Anspruchs, worin jedes in Zusammenfassungsform angezeigte Suchergebnis ein erstes Icon einschließt, das, wenn es durch den Benutzer ausgewählt wird, die Erweiterungsauswahl des Suchergebnisses erzeugt, und/oder worin jedes Suchergebnis ein Wählauswahlicon einschließt, das, wenn es durch den Benutzer ausgewählt wird, die Wählauswahl des Suchergebnisses erzeugt.

7. Verfahren nach einem der Ansprüche 1 bis 6, worin jedes im Zusammenfassungsformat angezeigte Suchergebnis, wenn es durch den Benutzer in einem Anzeigeabschnitt ausgewählt wird, der das im Suchergebnis enthaltene erste Icon nicht einschließt, die Wählauswahl des Suchergebnisses erzeugt.

8. Benutzervorrichtung, (200) umfassend:
eine Verarbeitungsvorrichtung;
eine Anzeige, die mit der Verarbeitungsvorrichtung gekoppelt ist;
ein Kommunikationssystem, das mit der Verarbeitungsvorrichtung gekoppelt ist; und
ein Speichersystem, das mit der Verarbeitungsvorrichtung gekoppelt ist und durch die Verarbeitungsvorrichtung ausführbare Anweisungen speichert, die bei einer solchen Ausführung die Benutzervorrichtung veranlassen, Operationen durchzuführen, welche umfassen:
Anzeigen einer Benutzerschnittstellenumgebung für eine Telefonwählanwendung auf der Anzeige der Benutzervorrichtung, wobei die Benutzerschnittstellenumgebung ein Anfrageeingabefeld und ein Suchergebnisanzeigefeld einschließt;
als Antwort auf eine Anfrage, die als Eingabe in das Anfrageeingabefeld bereitgestellt wird, erfolgendes Senden der Anfrage durch die Telefonwählanwendung an ein Suchsystem;
als Antwort auf eine Anfrage, die als Eingabe in das Anfrageeingabefeld bereitgestellt wird, erfolgendes Empfangen und Anzeigen von Suchergebnissen, die auf die Anfrage reagieren, durch die Wählanwendung, wobei jedes Suchergebnis eine jeweilige Entität identifiziert, von der bestimmt wurde, dass sie auf die Anfrage reagiert, worin:
ein erstes Suchergebnis der Suchergebnisse zunächst in einem Knowledge-Panel-Format angezeigt wird, das Daten bereitstellt, die eine erste Menge von Faktentypen für die jeweilige durch das erste Suchergebnis bezeichnete und identifizierte Entität beschreiben; und
jedes verbleibende Suchergebnis der Suchergebnisse zunächst in einem Übersichtsformat angezeigt wird, das Daten bereitstellt, die eine zweite Menge von Faktentypen für die jeweilige durch das verbleibende Suchergebnis identifizierte Entität beschreiben, und worin die zweite Menge von Faktentypen eine geeignete Teilmenge der ersten Menge von Faktentypen ist und Namen- und Standortdaten für die jeweilige Entität umfasst;
Empfangen einer Erweiterungsauswahl eines der verbleibenden Suchergebnisse durch die Wählanwendung und als Antwort:
Transformieren der Anzeige des ersten Suchergebnisses vom Knowledge-Panel-Format in das Zusammenfassungsformat; und
Transformieren der Anzeige des einen der verbleibenden Suchergebnisse vom Zusammenfassungspanelformat in das Knowledge-Panel-Format; und
Empfangen einer Wählauswahl eines der Suchergebnisse und als Antwort darauf durch die Wählanwendung erfolgendes Einleiten eines Sprachanrufs von der Datenverarbeitungsvorrichtung zu der jeweiligen durch das eine der Suchergebnisse identifizierte Entität.

9. Benutzervorrichtung nach Anspruch 8, worin das Anzeigen von Suchergebnissen, die auf die Anfrage reagieren, umfasst:
Gruppieren von Suchergebnissen, deren jedes eine jeweils andere Menge von Kontaktinformation für eine jeweilige Entität beschreibt; und
Anzeigen von Kontaktinformation, die jeder der jeweiligen Entitäten gemeinsam ist, als mit der Gruppierung von Suchergebnissen zusammengehörig.

10. Benutzervorrichtung nach Anspruch 9, worin die Kontaktinformation, die jeder der einzelnen Entitäten gemeinsam ist, eine gebührenfreie Telefonnummer ist.

11. Benutzervorrichtung nach Anspruch 8, 9 oder 10, worin die erste Menge von Faktentypen ein erstes Bild einschließt und jeder aus der zweiten Menge von Faktentypen das erste Bild nicht einschließt, und/oder worin die erste Menge von Faktentypen eine Telefonnummer einschließt und jeder aus der zweiten Menge von Faktentypen die Telefonnummer nicht einschließt.

12. Benutzervorrichtung nach Anspruch 8, 9, 10 oder 11, worin jedes in Zusammenfassungsform angezeigte Suchergebnis ein erstes Icon einschließt, das, wenn es durch den Benutzer ausgewählt wird, die Erweiterungsauswahl des Suchergebnisses erzeugt.

13. Benutzervorrichtung nach Anspruch 8, 9, 10, 11 oder 12, worin jedes Suchergebnis ein Wählauswahlicon einschließt, das, wenn es durch den Benutzer ausgewählt wird, die Wählauswahl des Suchergebnisses erzeugt.

14. Benutzervorrichtung nach Anspruch 12, worin jedes im Zusammenfassungsformat angezeigte Suchergebnis, wenn es durch den Benutzer in einem Anzeigeabschnitt ausgewählt wird, der das im Suchergebnis enthaltene erste Icon nicht einschließt, die Wählauswahl des Suchergebnisses erzeugt.

15. Nichtflüchtiges computerlesbares Medium, das durch eine Verarbeitungsvorrichtung ausführbare Anweisungen speichert, die bei einer solchen Ausführung die Benutzervorrichtung veranlassen, Operationen durchzuführen, welche ein Verfahren nach einem der Ansprüche 1 bis 7 umfassen.

## Revendications

1. Procédé mis en œuvre par un dispositif utilisateur, dans lequel le procédé comprend les étapes ci-dessous consistant à :
afficher (302), sur un écran d'affichage du dispositif utilisateur, un environnement d'interface utilisateur pour une application de numérotation téléphonique, l'environnement d'interface utilisateur incluant un champ de saisie de requête et un champ d'affichage de résultats de recherche ;
en réponse à une requête fournie en tant qu'entrée dans le champ de saisie de requête, envoyer, par le biais de l'application de numérotation téléphonique, la requête, à un système de recherche ;
recevoir et afficher, par le biais de l'application de numérotation, des résultats de recherche en réponse à la requête, chaque résultat de recherche identifiant une entité respective déterminée comme répondant à la requête, dans lequel :
un premier résultat de recherche parmi les résultats de recherche est initialement affiché dans un format de panneau de connaissances (304) qui fournit des données décrivant un premier ensemble de types de faits pour l'entité respective déterminée et identifiée par le premier résultat de recherche ; et
chaque résultat de recherche restant parmi les résultats de recherche est initialement affiché dans un format de résumé (306) qui fournit des données décrivant un second ensemble de types de faits pour l'entité respective identifiée par le résultat de recherche restant, et dans lequel le second ensemble de types de faits est un sous-ensemble propre du premier ensemble de types de faits et comprend un nom et des données d'emplacement de l'entité respective ;
recevoir (308), par le biais de l'application de numérotation, une sélection d'extension de l'un des résultats de recherche restants, et en réponse :
transformer (310) l'affichage du premier résultat de recherche, du format de panneau de connaissances en le format de résumé ; et
transformer (312) l'affichage dudit un résultat parmi les résultats de recherche restants, du format de résumé en le format de panneau de connaissances ; et
recevoir (314) une sélection de numérotation de l'un des résultats de recherche et, en réponse, passer, par le biais de l'application de numérotation, un appel vocal, du dispositif de traitement de données à l'entité respective identifiée par ledit un résultat parmi les résultats de recherche.

2. Procédé selon la revendication 1, dans lequel l'étape consistant à afficher des résultats de recherche en réponse à la requête comprend les étapes ci-dessous consistant à :
regrouper des résultats de recherche qui décrivent chacun un ensemble de coordonnées respectivement distinct pour une entité spécifique ; et
afficher, telles qu'associées au regroupement des résultats de recherche, des coordonnées communes à chacune des entités spécifiques.

3. Procédé selon la revendication 2, dans lequel les coordonnées communes à chacune des entités spécifiques correspondent à un numéro de téléphone sans frais.

4. Procédé selon la revendication 1, 2 ou 3, dans lequel le premier ensemble de types de faits inclut une première image, et dans lequel chaque type du second ensemble de types de faits n'inclut pas la première image.

5. Procédé selon l'une quelconque des revendications précédentes, dans lequel le premier ensemble de types de faits inclut un numéro de téléphone, et dans lequel chaque type du second ensemble de types de faits n'inclut pas le numéro de téléphone.

6. Procédé selon l'une quelconque des revendications précédentes, dans lequel chaque résultat de recherche affiché dans le format de résumé inclut une première icône qui, lorsqu'elle est sélectionnée par l'utilisateur, génère la sélection d'extension du résultat de recherche, et/ou dans lequel chaque résultat de recherche inclut une icône de sélection de numérotation qui, lorsqu'elle est sélectionnée par l'utilisateur, génère la sélection de numérotation du résultat de recherche.

7. Procédé selon l'une quelconque des revendications 1 à 6, dans lequel chaque résultat de recherche affiché dans le format de résumé, lorsqu'il est sélectionné dans une partie d'affichage qui n'inclut pas la première icône incluse dans le résultat de recherche, par l'utilisateur, génère la sélection de numérotation du résultat de recherche.

8. Dispositif utilisateur, (200) comprenant :
un dispositif de traitement ;
un écran d'affichage couplé au dispositif de traitement ;
un système de communication couplé au dispositif de traitement ; et
un système de mémoire couplé au dispositif de traitement et stockant des instructions exécutables par le dispositif de traitement qui, lorsqu'elles sont exécutées, amènent le dispositif utilisateur à mettre en œuvre des opérations comprenant les étapes ci-dessous consistant à :
afficher, sur l'écran d'affichage du dispositif utilisateur, un environnement d'interface utilisateur pour une application de numérotation téléphonique, l'environnement d'interface utilisateur incluant un champ de saisie de requête et un champ d'affichage de résultats de recherche ;
en réponse à une requête fournie en tant qu'entrée dans le champ de saisie de requête, envoyer, par le biais de l'application de numérotation téléphonique, la requête à un système de recherche ;
recevoir et afficher, par le biais de l'application de numérotation, en réponse à une requête fournie en tant qu'entrée dans le champ de saisie de requête, des résultats de recherche en réponse à la requête, chaque résultat de recherche identifiant une entité respective déterminée comme répondant à la requête, dans lequel :
un premier résultat de recherche parmi les résultats de recherche est initialement affiché dans un format de panneau de connaissances qui fournit des données décrivant un premier ensemble de types de faits pour l'entité respective déterminée identifiée par le premier résultat de recherche ; et
chaque résultat de recherche restant parmi les résultats de recherche est initialement affiché dans un format de résumé qui fournit des données décrivant un second ensemble de types de faits pour l'entité respective identifiée par le résultat de recherche restant, et dans lequel le second ensemble de types de faits est un sous-ensemble propre du premier ensemble de types de faits et comprend un nom et des données d'emplacement de l'entité respective ;
recevoir, par le biais de l'application de numérotation, une sélection d'extension de l'un des résultats de recherche restants, et en réponse :
transformer l'affichage du premier résultat de recherche, du format de panneau de connaissances en le format de résumé ; et
transformer l'affichage dudit un résultat parmi les résultats de recherche restants, du format de résumé en le format de panneau de connaissances ; et
recevoir une sélection de numérotation de l'un des résultats de recherche et, en réponse, passer, par le biais de l'application de numérotation, un appel vocal, du dispositif de traitement de données à l'entité respective identifiée par ledit un résultat parmi les résultats de recherche.

9. Dispositif utilisateur selon la revendication 8, dans lequel l'étape consistant à afficher des résultats de recherche en réponse à la requête comprend les étapes ci-dessous consistant à :
regrouper des résultats de recherche qui décrivent chacun un ensemble de coordonnées respectivement distinct pour une entité spécifique ; et
afficher, telles qu'associées au regroupement des résultats de recherche, des coordonnées communes à chacune des entités spécifiques.

10. Dispositif utilisateur selon la revendication 9, dans lequel les coordonnées communes à chacune des entités spécifiques correspondent à un numéro de téléphone sans frais.

11. Dispositif utilisateur selon la revendication 8, 9 ou 10, dans lequel le premier ensemble de types de faits inclut une première image, et chaque type du second ensemble de types de faits n'inclut pas la première image, et/ou dans lequel le premier ensemble de types de faits inclut un numéro de téléphone, et chaque type du second ensemble de types de faits n'inclut pas le numéro de téléphone.

12. Dispositif utilisateur selon la revendication 8, 9, 10 ou 11, dans lequel chaque résultat de recherche affiché dans le format de résumé inclut une première icône qui, lorsqu'elle est sélectionnée par l'utilisateur, génère la sélection d'extension du résultat de recherche.

13. Dispositif utilisateur selon la revendication 8, 9, 10, 11 ou 12, dans lequel chaque résultat de recherche inclut une icône de sélection de numérotation qui, lorsqu'elle est sélectionnée par l'utilisateur, génère la sélection de numérotation du résultat de recherche.

14. Dispositif utilisateur selon la revendication 12, dans lequel chaque résultat de recherche affiché dans le format de résumé, lorsqu'il est sélectionné dans une partie d'affichage qui n'inclut pas la première icône incluse dans le résultat de recherche, par l'utilisateur, génère la sélection de numérotation du résultat de recherche.

15. Support non transitoire lisible par ordinateur stockant des instructions exécutables par un dispositif utilisateur qui, lorsqu'elles sont exécutées, amènent le dispositif utilisateur à mettre en œuvre des opérations comprenant un procédé selon l'une quelconque des revendications 1 à 7.
